# EUROPEAN PATENT APPLICATION

(11) **EP 2 546 194 A1**
(43) Date of publication of application: **16.01.2013**
(21) Application number: 11753287.9
(22) Date of filing: 04.03.2011
(51) Int. Cl.: C01B 25/45, H01M 4/58

(54) **PHOSPHATE COMPOUND, POSITIVE ELECTRODE FOR SECONDARY BATTERY AND METHOD FOR PRODUCING SECONDARY BATTERY**

(30) Priority: 09.03.2010 JP 2010051564
(71) Applicant: Asahi Glass Company, Limited, Tokyo 100-8405 (JP)
(72) Inventor: BEPPU, Yoshihisa, Tokyo 100-8405 (JP)
(74) Representative: Müller-Boré & Partner Patentanwälte
(86) International application number: PCT/JP2011/055105
(87) International publication number: WO 2011/111628

(57) **Abstract**

It is to provide a process for producing a phosphate compound capable of producing a phosphate compound excellent in the properties and the reliability, efficiently at a low cost.

A first compound having a composition of MₓP_{y}O_{z} (wherein M is at least one atom selected from Fe, Mn , Co and Ni, the valency N¹ of M satisfies +2≦N¹≦+4, and 0.8≦x/y≦1.2) and a second compound containing at least one atom A selected from Li, Ni and K are blended in an atomic ratio of A, M and P (A:M:P) of a:b:1 (wherein 0<a<2, and 0.8<b<1.2). The blended product of the first compound and the second compound is pulverized while mixing it, and the pulverized product is heated in an inert gas or in a reducing gas to produce a phosphate compound having a composition represented by AₐM_{b}PO_{c} (wherein the valency of M is equal to or lower than N¹, and c is a number which depends on the values of a and b, and the valency of M).

## Description

### TECHNICAL FIELD

The present invention relates to a process for producing a phosphate compound, a cathode for a secondary battery, and a method for producing a secondary battery.

### BACKGROUND ART

In recent years, lithium-ion secondary batteries are broadly used as power supply for portable electronic devices such as mobile phones and notebook computers, electric power tools, etc. As a cathode material for a next-generation lithium-ion secondary battery, from the viewpoint of resource amount, safety, cost, stability, and so on, a phosphate compound (LiMPO₄, M is an atom of a transition metal element) having an olivine-type crystal structure represented by lithium iron phosphate (LiFePO₄) has been spotlighted, and its production process has been studied.

Patent Document 1 discloses production of a cathode material for a secondary battery, by melting a mixture containing Li₂O, an oxide of a transition metal atom M such as Fe₂O₃, and P₂O₅, quenching the molten product to form precursor glass, and firing the precursor glass to precipitate crystals of LiFePO₄, crystals of LiMnₓFe₁₋ₓPO₄ (0<x<1) or the like.

Patent Documents 2 and 3 disclose a process for producing LiMPO₄ by the solid phase reaction represented by the following formula (1):

Li₃PO₄+M₃(PO₄)₂·nH₂O→3LiMPO₄+nH₂O (1)

### PRIOR ART DOCUMENTS

### PATENT DOCUMENTS

Patent Document 1: JP-A-2009-087933
Patent Document 2: JP-A-2003-292308
Patent Document 3: JP-A-2003-292309

### DISCLOSURE OF INVENTION

### TECHNICAL PROBLEM

With a mixture containing all of Li, a transition metal atom M such as Fe, and P, constituting a phosphate compound, it tends to be difficult to obtain a uniform molten product at the time of heating, as the glass formation region is narrow. Accordingly, by the process as disclosed in Patent Document 1, it tends to be difficult to control the composition of the phosphate compound and crystal particles thereof.

Further, in the case of the solid phase reaction using iron phosphate (M₃(PO₄)₂·8H₂O) as the material as disclosed in Patent Documents 2 and 3, the iron phosphate is expensive. In addition, it tends to be difficult to control the composition of the phosphate compound such as lithium iron phosphate.

The object of the present invention is to provide a process which makes control of the composition of a phosphate compound easy. According to the present invention, it is possible to provide a process for producing a phosphate compound which is capable of producing a phosphate compound excellent in the battery properties and the liability efficiently at a low cost. The present invention provides methods for producing a cathode for a secondary battery, and a secondary battery, excellent in the battery properties and the reliability.

### SOLUTION TO PROBLEM

The present invention provides the following [1] to [15].
[1] A process for producing a phosphate compound, comprising:
   a step of blending a first compound having a composition represented by the following formula (1) and a second compound containing at least one atom A selected from Li, Na and K in an atomic ratio represented by the following formula (2) to obtain a blended product;
   a step of pulverizing the blended product while mixing it to obtain a pulverized product; and
   a step of heating the pulverized product in an inert gas or in a reducing gas to obtain a phosphate compound having a composition represented by the following formula (3):

      MₓP_{y}O_{z} (1)
   wherein M is at least one atom selected from Fe, Mn, Co and Ni, the valency N¹ of M satisfies +2≦N¹≦+4, x and y are numbers which satisfy 0.8≦x/y≦1.2, and z is a number which depends on the values of x and y, and the valency N¹ of M;

   A:M:P=a:b:1 (2)

   wherein A and M are the same atoms as the above, a satisfies 0<a<2, and b satisfies 0.8<b<1.2; and

   AₐM_{b}PO_{c} (3)

   wherein A and M are the same atoms as the above, the valency of M is equal to or lower than the above N¹, a and b are the same numbers as the above, and c is a number which depends on the values of a and b, and the valency of M.
[2] The process for producing a phosphate compound according to [1], wherein the first compound is a compound obtained by blending at least one member selected from an oxide of M, an oxyhydroxide of M and a metal of M, and at least one member selected from phosphorus oxide, ammonium phosphate, ammonium hydrogen phosphate, phosphoric acid, polyphosphoric acid, phosphorous acid and hypophosphorous acid, in a composition of M and P as represented by the formula (1) to obtain a material mixture, pulverizing the material mixture, followed by heating to obtain a molten product, and cooling the molten product.
[3] The process for producing a phosphate compound according to [1], which comprises a step of blending at least one member selected from an oxide of M, an oxyhydroxide of M and a metal of M, and at least one member selected from phosphorus oxide, ammonium phosphate, ammonium hydrogen phosphate, phosphoric acid, polyphosphoric acid, phosphorous acid and hypophosphorous acid, in a composition of M and P as represented by the formula (1) to obtain a material mixture, pulverizing the material mixture, followed by heating to obtain a molten product, and cooling the molten product to obtain the first compound having a composition represented by the formula (1).
[4] The process for producing a phosphate compound according to [2] or [3], wherein the rate of cooling the molten product is from -10³ °C/sec to -10¹⁰ °C/sec.
[5] The process for producing a phosphate compound according to any one of [1] to [4], wherein the first compound is a solid compound containing an amorphous portion.
[6] The process for producing a phosphate compound according to any one of [1] to [5], wherein the second compound is a compound which is converted to A₂O by heating.
[7] The process for producing a phosphate compound according to any one of [1] to [6], wherein the second compound is at least one member selected from A₂CO₃, AHCO₃ and AOH (provided that these compounds may form a hydrated salt).
[8] The process for producing a phosphate compound according to any one of [1] to [7], wherein the step of heating the pulverized product to obtain the phosphate compound having a composition represented by the formula (3) is carried out in an inert gas or in a reducing gas at from 400 to 900°C.
[9] The process for producing a phosphate compound according to any one of [1] to [8], wherein in the step to obtain the pulverized product, at least one carbon source selected from an organic compound and a carbon powder is incorporated in the blended product, and the amount of the carbon source is from 0.1 to 20 mass% by the proportion of the amount (mass) of the carbon source as calculated as carbon based on the total mass of the blended product and the amount (mass) of the carbon source as calculated as carbon.
[10] The process for producing a phosphate compound according to any one of [1] to [9], wherein the phosphate compound having a composition represented by the formula (3) is crystal particles having a composition represented by the following formula (4):

   AₐM_{b}PO_{(0.5a+b+2.5)} (4)

   wherein A and M are the same atoms as the above, and a and b are the same numbers as the above.
[11] The process for producing a phosphate compound according to any one of [1] to [10], wherein the phosphate compound having a composition represented by the formula (3) is particles containing LiMPO₄ having an olivine-type crystal structure.
[12] The process for producing a phosphate compound according to any one of [1] to [11], wherein the phosphate compound having a composition represented by the formula (3) is particles containing LiFe_{d}Mn_{1-d}PO₄ (wherein d satisfies 0≦d≦1) having an olivine-type crystal structure.
[13] A process for producing a phosphate compound, comprising:
   a step of blending a first compound having a composition represented by the following formula (1) and a second compound containing at least one atom A selected from Li, Na and K to obtain a blended product;
   a step of pulverizing the blended product while mixing it to obtain a pulverized product; and
   a step of heating the pulverized product in an inert gas or in a reducing gas to obtain a phosphate compound having a composition represented by the following formula (4):

      MₓP_{y}O_{z} (1)

      wherein M is at least one atom selected from Fe, Mn, Co and Ni, the valency N¹ of M satisfies +2≦N¹≦+4, x and y are numbers which satisfy 0.8≦x/y≦1.2, and z is a number which depends on the values of x and y, and the valency N¹ of M;

      AₐM_{b}PO₍₀._{5a+b+2.5)} (4)

      wherein A and M are the same atoms as the above, the valency of M is equal to or lower than the above N¹, a satisfies 0<a<2, and b satisfies 0.8<b<1.2.
[14] A method for producing a cathode for a secondary battery, which comprises obtaining a phosphate compound by the production process as defined in any one of [1] to [13], and using the phosphate compound as a cathode material for a secondary battery to produce a cathode for a secondary battery.
[15] A method for producing a secondary battery, which comprises obtaining a cathode for a secondary battery by the production method as defined in [14], and using the cathode for a secondary battery to produce a secondary battery.

### ADVANTAGEOUS EFFECTS OF INVENTION

According to the production process of the present invention, a phosphate compound can be produced at a low cost without employing special apparatus or reaction conditions, since it tends to be easy to control the composition of the phosphate compound. Accordingly, a phosphate compound excellent in the battery properties and the reliability can be produced efficiently at a low cost. By using the phosphate compound obtainable by the present invention, a cathode for a secondary battery, and a secondary battery, excellent in the battery properties and the reliability, can be produced.

### BRIEF DESCRIPTION OF DRAWINGS

Fig. 1 is a diagram illustrating X-ray diffraction patterns of the first compound (a solid in the form of flakes) produced in Examples 1, 3 and 5.
Fig. 2 is a diagram illustrating X-ray diffraction patterns of particles of a phosphate compound (having an olivine-type crystal structure) produced in Examples 1, 3 and 5.
Fig. 3 is a diagram illustrating X-ray diffraction patterns of particles of a phosphate compound (having an olivine-type crystal structure) produced in Examples 11 and 12.
Fig. 4 is a diagram illustrating X-ray diffraction patterns of the first compound (a solid in the form of flakes) produced in Examples 13, 15 and 17.
Fig. 5 is a diagram illustrating X-ray diffraction patterns of particles of a phosphate compound (having an olivine-type crystal structure) produced in Examples 13, 15 and 17.

### DESCRIPTION OF EMBODIMENTS

In the following description, A is at least one atom selected from Li, Na and K. M is at least one atom selected from Fe, Mn, Co and Ni.

The chemical formulae such as the formulae (1) and (3) represent an average composition. Accordingly, A representing atoms of the above three alkali metal elements may be a combination of two or more atoms selected from the above three in the chemical formula representing the average composition. Likewise, M representing atoms of the above four transition metal elements may be a combination of two or more atoms selected from the above four in the chemical formulae representing the average composition.

Further, crystals having an olivine-type structure will hereinafter be referred to as olivine-type crystals, and particles containing olivine-type crystals will hereinafter sometimes be referred to as olivine-type crystal particles. The olivine-type crystal particles may partially contain a crystal structure other than the olivine-type crystal structure, and may partially contain an amorphous structure. The olivine-type crystal particles preferably consist substantially solely of the olivine-type crystals.

Further, a phosphate compound having a composition represented by the formula (3), which is a desired product of the production process of the present invention, will sometimes be referred to as a phosphate compound (3).

The process for producing a phosphate compound of the present invention comprises the following steps (I), (II) and (III) in this order. Before each of the steps (I) to (III), between steps or after each step, another step may be conducted within a range not to impair the respective steps.

Step (I): a step of blending the above first compound and the above second compound in an atomic ratio represented by the above formula (2) to obtain a blended product;

Step (II): a step of pulverizing the blended product while mixing it to obtain a pulverized product; and

Step (III): a step of heating the pulverized product in an inert gas or in a reducing gas to obtain a phosphate compound (3).

Further, the first compound is preferably one produced by blending a compound containing M and a compound containing P in a composition of M and P as represented by the formula (1) to obtain a material mixture, pulverizing the material mixture, heating the pulverized product to obtain a molten product, and cooling the molten product. This step for producing the first compound will hereinafter be referred to as a step (IV).

The first compound is particularly preferably a compound obtained by blending at least one member selected from an oxide of M, an oxyhydroxide of M and a metal of M, and at least one member selected from phosphorus oxide, ammonium phosphate, ammonium hydrogen phosphate, phosphoric acid, polyphosphoric acid, phosphorous acid and hypophosphorous acid, in a composition of M and P as represented by the formula (1) to obtain a material mixture, pulverizing the material mixture, followed by heating to obtain a molten product, and cooling the molten product.

Here, molten means that at least one member selected from an oxide of M, an oxyhydroxide of M and a metal of M and at least one member selected from phosphorus oxide, ammonium phosphate, ammonium hydrogen phosphate, phosphoric acid, polyphosphoric acid, phosphorous acid and hypophosphorous acid fuse and the mixture thereof is in a transparent state when visually observed.

The phosphate compound to be produced by the production process of the present invention is a compound useful as a cathode material for a secondary battery, and is particularly useful as a cathode material for a lithium-ion secondary battery.

### [Step (I)]

The step (I) is a step of blending the first compound and the second compound in an atomic ratio as represented by the formula (2) to obtain a blended product.

The first compound is preferably preliminarily pulverized and then blended. Pulverization is preferably carried out by dry-pulverization or wet-pulverization by using a mixer, a ball mill, a jet mill, a planetary mill or the like, and dry-pulverization is preferred since removal of the solvent is unnecessary.

In the first compound, M is at least one atom selected from Fe, Mn, Co and Ni. In a case where the phosphate compound is applied to a cathode material for a secondary battery, in view of the cost, M is preferably at least one member selected from Fe and Mn. With a view to obtaining a theoretical capacity of the cathode material for a secondary battery, it is particularly preferably Fe. With a view to increasing the operating voltage, it is preferably at least one member selected from Co and Ni. The valency of M is a value which may vary in each step of the production process of the present invention and is within a range of from +2 to +4. Accordingly, the valency N¹ of M in the first compound is +2≦N¹≦+4. It is preferably +2, +8/3 or +3 when M is Fe, +2, +3 or +4 when it is Mn, +8/3 when it is Co, and +2 or +4 when it is Ni.

x and y in the formula (1) are optional numbers which satisfy 0.8≦x/y≦1.2. By satisfying the formula, a phosphate compound (3) can be obtained.

x and y in the formula (1) are preferably such that x/y is 1. For example, in a case of a pyrophosphate of M wherein MₓP_{y}O_{z} is represented by M₂P₂O₇, the valency N¹ of M is +2, and a phosphate compound having an olivine-type crystal structure is likely to be obtained. When M₂P₂O₇ and an oxide of A (for example, A₂O) are mixed and heated, the solid phase reaction represented by the following formula (5) will proceed stoichiometrically, whereby AMPO₄ is likely to be obtained. Here, M is an atom having a valency N¹ of +2. The same applies to the other valencies.

M(II)₂P₂O₇+A₂O→2AM(II)PO₄ (5)

Further, when MₓP_{y}O_{z} wherein x/y=1 is MPO₄, a phosphate compound (3) having an olivine-type crystal structure is likely to be obtained and in addition, it can efficiently be produced in the air or in an oxidizing gas having an oxygen partial pressure of higher than 0.21 and at most 1.0. Production in the air is particularly preferred since it is not necessary to control the atmosphere. When such MPO₄ and an oxide of A (for example, A₂O) are mixed and heated, the solid phase reaction represented by the following formula (6) will proceed stoichiometrically, whereby AMPO₄ is likely to be obtained.

2M(III)PO₄+A₂O→2AM(II)PO₄+0.5O₂ (6)

The value of z in the formula (1) depends on the values of x and y, and the valency N¹ of M, and varies depending on these values. For example, when M is Fe, the valency N¹ of M is +2, the values of x and y are 2 and x/y=1, respectively, and in the case of a dimer (pyrophosphoric acid), z is 7. Further, when M is Fe, the valency N¹ of M is +3, and the values of x and y are 1 and x/y=1, respectively, z is 4. z usually varies depending on the normal salt (orthophosphoric acid), the dimer (pyrophosphoric acid) or the condensed salt (polyphosphoric acid) even with the same type of the atom of M, values of x and y and valency N¹ of M, and z is independent of the valency N¹ of M. Also in cases where M is Mn, Co and Ni, when the valency N¹ is respectively +2, the values of x and y are 1 and x/y=1, respectively, and in the case of a dimer (pyrophosphoric acid), z is 5 in all cases.

The first compound preferably contains an amorphous substance. By the first compound containing an amorphous substance, it is easily pulverized since it is soft as compared with a crystalline substance, and further, as the diffusion of substances in an amorphous substance is quick, the reactivity of the first compound and the second compound containing A can be increased. The subsequent step (II) is easily carried out, and the composition of the phosphate compound can easily be controlled. Further, in the later step (III), it is possible to prevent the formed product from being agglomerated, and it is easy to control the particle size of the formed product. The amount of the amorphous portion is preferably from 80 to 100 mass% of the entire first compound. When the amount of the amorphous portion is within such a range, the first compound is easily pulverized, thus increasing the reactivity with the second compound.

In a case where the first compound contains a crystalline substance, the crystalline substance becomes nuclei in the step (III) to accelerate crystallization. The amount of the crystalline substance in the first compound is preferably from 0 to 20 mass% based on the total mass of the first compound. If the amount of the crystalline portion is at most 20 mass%, the crystalline substance has an effect to be nuclei in the step (III) to accelerate the reaction, without decreasing easiness of pulverization of the first compound and the reactivity with the second compound.

The first compound is not limited to a compound consisting solely of M, phosphorus (P) and oxygen (O), but may contain at least one atom X selected from V, Si, B, Al, Mg and Zn. By the first compound containing X, the reactivity of the first compound and the second compound can be improved. Further, when an amorphous substance is applied as the first compound, conversion of the first compound to the amorphous state may be promoted. The content of X (the total content in a case where X is a plurality of atoms) is preferably such that the atomic ratio of X to the total amount of phosphorus (P) and X (X/(P+X)) is within a range of from 0.01 to 0.2. Further, the first compound may contain an atom Y of an element which functions as a reducing agent (for example, carbon (C)) in such a content that the atomic ratio of Y to the total amount of phosphorus (P) and Y (Y/(B+Y)) is within a range of from 0.01 to 0.1.

The first compound is preferably in the form of flakes or fibers. In the case of flakes, the average thickness is preferably at most 200 µm, particularly preferably at most 100 µm. The average diameter of a plane vertical to the average thickness in the case of flakes is not particularly limited. In the case of fibers, the average diameter is preferably at most 50 µm, particularly preferably at most 30 µm. When the size is at most the upper limit of the average thickness or the average diameter, time and effort can be reduced in the step (II), and the crystallization efficiency can be increased. The average thickness and the average diameter can be measured by a caliper or a micrometer. The average diameter can be measured also by observation by a microscope.

The second compound is a compound containing at least one atom A selected from Li, Na and K, and is a compound which is thermally decomposed and converted to A₂O by heating. The second compound is preferably a compound which is converted to A₂O in the step (III). By using such a compound, the phosphate compound (3) can efficiently be obtained. The second compound is preferably at least one member selected from a carbonate of A (A₂CO₃), a hydrogen carbonate of A (AHCO₃), a hydroxide of A (AOH), a nitrate of A (ANO₃), a chloride of A (ACI), a sulfate of A (A₂SO₄), an acetate of A (CH₃COOA) and an oxalate of A ((COOA)₂) (these compounds may respectively form a hydrated salt). It is particularly preferably at least one member selected from A₂CO₃, AHCO₃ and AOH, which are easily available at a low cost, and which are likely to be converted to A₂O by heating. The second compound itself being A₂O is unfavorable, since A₂O is highly reactive with H₂O and CO₂ and has low chemical stability.

As A constituting the second compound, it preferably essentially contains Li, and it particularly preferably consists solely of Li, since such a compound is suitable as a cathode material for a secondary battery. The phosphate compound containing Li can increase the capacity per unit volume (mass) of a secondary battery.

The purity of the first compound and the second compound is not particularly limited, and considering the reactivity, the properties of the phosphate compound (3) (for example, properties of the cathode material), etc., it is preferably at least 99 mass%.

The first compound and the second compound are preferably in the form of particles. The mean particle size of the particles is not particularly limited, and the mean particle size of each of them is preferably from 1 nm to 100 µm, more preferably from 10 nm to 10 µm, particularly preferably from 10 nm to 1 µm, as the mean particle size as calculated as volume. When the mean particle size is within the above range, the reaction of the first compound and the second compound can be accelerated. When the mean particle size is small, the reduction reaction is accelerated, whereby the heating temperature can be reduced and the time can be shortened in the step (III), such being favorable. The mean particle size of each of the first compound and the second compound is preferably within the above range when used as the materials in the step (I). That is, in a case of producing the first compound in the step (IV), even when the mean particle size of the obtained first compound is out of the above range, the first compound is preliminarily pulverized before blending in the step (I) to adjust the mean particle size to be within the above range. Fine particles and the like formed by pulverization are not necessarily removed. The particle size can be measured by a sedimentation method or by a laser diffraction/scattering type particle size measuring device.

The first compound and the second compound are blended in an atomic ratio as represented by the above-described formula (2), that is, so that a in the formula (2) satisfies 0<a<2 and b satisfies 0.8<b<1.2. By a and b being within the above ranges, a phosphate compound (3) can be obtained. The phosphate compound (3) obtainable by the production process is preferably in the form of particles, more preferably crystalline particles, particularly preferably olivine-type crystal particles. By blending the first compound and the second compound in an atomic ratio as represented by the formula (2), olivine-type crystal particles of the phosphate compound (3) are likely to be obtained. Further, olivine-type crystal particles of a phosphate compound (3) having a composition of AMPO₄ are likely to be obtained.

When the compounds are blended in an atomic ratio of A, M and P as represented by the formula (2) to obtain a blended product, the value of the atomic ratio of oxygen atoms (the atomic ratio of oxygen atoms based on the phosphorus (P) atoms being 1 assuming that the atoms are in the form of oxides) in the blended product is a value which may vary in the later step (III) and is a value of c after the step (III). For example, in a case where the value of the oxygen atomic ratio is increased or decreased by e.g. oxidation-reduction or volatilization of components in the step (III), a value considering the increase or decrease is preferred. The value of the atomic ratio of oxygen atoms based on the phosphorus (P) atoms being 1 in the blended product is preferably at least 100% and at most 103% based on the desired value of c of the phosphate compound (3).

A means of blending the first compound and the second compound is selected from means of blending specific amounts of two or more compounds, and it is preferred to blend these compounds by mixing. In the blended product of the first compound and the second compound, one carbon source selected from the after-mentioned organic compound and carbon powder may be incorporated. Particularly as olivine-type crystals of the phosphate compound (3) are an insulating substance, when the powder comprising particles of the phosphate compound (3) is used as a cathode material for a secondary battery, it is preferred to incorporate a carbon source in the blended product. The carbon source functions as a reducing agent at the time of heating and further functions as a conductive material after heating. When the phosphate compound (3) is used as a cathode material for a secondary battery, by the powder comprising particles of the phosphate compound (3) containing a conductive material, the conductivity of the cathode material for a secondary battery can be increased.

The carbon powder contained in the blended product adheres to the surface of the particles of the phosphate compound (3) to improve the conductivity of the powder which is aggregates of the particles of the phosphate compound (3). The organic compound functions as a binder of the carbon powder to the phosphate compound (3) and in addition, it itself is thermally decomposed in the step (III) and further carbonized to form a carbide, and the carbide itself improves the conductivity of the phosphate compound (3) as a conductive material. Accordingly, the organic compound is preferably one which is thermally decomposed in the step (III) and has a property to be carbonized by release of hydrogen atoms and oxygen atoms, whereby it is possible to let the reaction product of the organic compound in the step (III) function as a conductive material. Both the organic compound and the carbon powder function as a conductive material, and accordingly at least one of them may be added.

In a case where a carbon powder is used as the carbon source, it is preferably used in combination with an organic compound for the purpose of improving the binding force to the phosphate compound (3). That is, it is preferred that an organic compound is singly added, or an organic compound and a carbon powder are added, to the blended product.

The organic compound and the carbon powder have a function to accelerate the reduction reaction of the first compound and the second compound in the step (III). For example, when MPO₄ (the valency of M is +3) and A₂O are heated, when an organic compound (CₘHₙ) is contained, the reduction reaction represented by the following formula (7) is accelerated, whereby AMPO₄ (the valency of M is +2) is likely to be obtained.

2M(III)PO₄+A₂O+CₘHₙ+(m+n/4-1/2)O₂ →2AM(II)PO₄+mCO₂+n/2H₂O (7)

The organic compound is preferably one which is decomposed and carbonized at a temperature higher than the reaction temperature of the first compound and the second compound (in a case where the first compound is an amorphous substance, including the crystal nucleus formation and grain growth temperature). The organic compound is preferably used in combination with the carbon powder, as it itself functions as a binder of the carbon powder to the phosphate compound (3). Further, in order to prevent oxidation of the blended product at the time of pulverization and to further accelerate reduction, it is preferred to use an organic compound having a reducing property.

The organic compound is preferably at least one member selected from saccharides, amino acids, peptides, aldehydes and ketones, and particularly preferably saccharides, amino acids or peptides. The saccharides may be monosaccharides such as glucose, fructose and galactose, oligosaccharides such as sucrose, maltose, cellobiose and trehalose, inverted sugar, polysaccharides such as dextrin, amylose, amylopectin and cellulose, and a related substance thereof, such as ascorbic acid. Monosaccharides and some of oligosaccharides have a strong reducing property and are preferred.

The amino acids may be amino acids such as alanine and glycine. The peptides may be low-molecular-weight peptides having a molecular weight of at most 1,000. Further, an organic compound having a reducing functional group such as an aldehyde group or a ketone group may also be mentioned. The organic compound is particularly suitably glucose, sucrose, glucose-fructose inverted sugar, caramel, a starch, an α-starch, carboxymethylcellulose or the like.

As the carbon powder, carbon black, graphite, acetylene black or the like may preferably be used. By incorporating the carbon powder in the blended product at the time of pulverization, it becomes not necessary to separately provide, after the olivine-type crystal particles of the phosphate compound (3) are formed in the step (III), a step of mixing the carbon powder. Further, by incorporating the carbon powder to the blended product at the time of pulverization together with the organic compound, the distribution of the carbon powder in the powder of the phosphate compound (3) becomes uniform, and contact area with the organic compound or its thermally decomposed product (carbonized product) becomes large. It thereby becomes possible to increase the binding force of the carbon powder to the phosphate compound (3).

The amount of the carbon source is preferably such that the proportion of the amount (mass) of the carbon source as calculated as carbon based on the total mass of the blended product and the amount (mass) of the carbon source as calculated as carbon is from 0.1 to 20 mass%, particularly from 2 to 10 mass%. By the amount of the carbon source being at least the lower limit of the above range, the conductivity when the phosphate compound (3) is used as a cathode material for a secondary battery can sufficiently be increased. By the amount being at most the upper limit of the above range, when the phosphate compound (3) is used as a cathode material for a secondary battery, properties as the cathode material for a secondary battery can be maintained high.

### [Production of first compound]

As the first compound, a commercially available product may be used, or it may be produced. In a case where it is produced, it is preferably produced by the above step (IV). That is, it is preferred to produce the first compound by blending a compound containing M and a compound containing P in a composition represented by the formula (1) to obtain a material mixture, pulverizing the material mixture, heating the pulverized product to obtain a molten product, and cooling the molten product. Further, in the case of producing the first compound containing the above atom X and atom Y, it can be produced by using a compound containing X and a compound containing Y in addition to the compound containing M and the compound containing P.

The compound containing M in the material mixture is preferably at least one compound selected from an oxide of M (FeO, Fe₃O₄, Fe₂O₃, MnO, Mn₂O₃, MnO₂, CoO, Co₃O₄, Co₂O₃ and NiO), an oxyhydroxide of M (MO(OH)) and a metal of M. In view of availability and the cost, Fe₃O₄, Fe₂O₃, MnO, Mn₂O₃, MnO₂, Co₃O₄ or NiO is particularly preferred.

The compound containing P in the material mixture is preferably at least one compound selected from phosphorus oxide (P₂O₅), ammonium phosphate ((NH₄)₃PO₄), ammonium hydrogen phosphate ((NH₄)₂HPO₄, NH₄H₂PO₄), phosphoric acid (H₃PO₄), polyphosphoric acid (H₍ₙ₊₂₎PₙO(₃ₙ₊₁₎), phosphorous acid (H₃PO₃) and hypophosphorous acid (H₃PO₂). (NH₄)₂HPO₄, NH₄H₂PO₄ and P₂O₅ are particularly preferred, which are easily available and easily handled.

A preferred combination of the compound containing M and the compound containing P is Fe₃O₄, Fe₂O₃, MnO, Mn₂O₃, MnO₂, Co₃O₄ or NiO and NH₄H₂PO₄ or P₂O₅, in view of availability.

Pulverization of the material mixture is carried out preferably by using a ball mill, a jet mill, a planetary mill or the like. The pulverization may be either dry or wet pulverization, and is preferably dry pulverization, whereby removal of the dispersion medium is unnecessary. By the pulverization, a pulverized product having materials with smaller particle sizes mixed uniformly and densely.

Heating of the pulverized product after the material mixture is pulverized may be carried out in any of the air, an inert gas and a reducing gas. Melting of the pulverized product in the air is preferred in view of the cost. Even when the compound is produced in the air, by heating it in the later step (step (III)) in an inert gas or in a reducing gas, M constituting the compound is reduced. For example, even when the valency of M in the first compound produced by heating in the air exceeds +2, M is reduced in the step (III), and a phosphate compound (3) wherein the valency of M is +2 can be obtained.

The inert gas is a gas containing at least 99 vol% of at least one inert gas selected from nitrogen gas (N₂) and rare gases such as helium gas (He) and argon gas (Ar). The reducing gas means a gas comprising the above inert gas and containing a gas having a reducing property, and containing substantially no oxygen. The gas having a reducing property may, for example, be hydrogen gas (H₂), carbon monoxide gas (CO) or ammonia gas (NH₃). With respect to the amount of the gas having a reducing property in the inert gas, the amount of the gas having a reducing property contained in the entire gas by volume is preferably at least 0.1 vol%, particularly preferably from 1 to 10 vol%. The oxygen content is preferably at most 1 vol%, particularly preferably at most 0.1 vol% in the gas by volume.

The heating temperature of the pulverized product of the material mixture is preferably from 1,100 to 1,400°C, particularly preferably from 1,200 to 1,350°C. When it is at least the lower limit of the above range, melting tends to be easily, and when it is at most the upper limit of the above range, the material components will hardly volatilize.

Further, the heating time of the pulverized product of the material mixture is preferably from 0.2 to 2 hours, particularly preferably from 0.5 to 2 hours. Within the above range, sufficient uniformity of the molten product of the material mixture will be obtained, and the material components will hardly volatilize.

To obtain, as the first compound, a compound containing an amorphous portion, particularly a solid compound having from 80 to 100 mass% of an amorphous portion, a method of cooling the molten product obtained by heating to obtain a vitreous substance, a hydrothermal method or a sol-gel method is employed. With a view to producing an amorphous substance in a large amount at a low cost, preferred is a method of cooling the molten product obtained by heating to produce a vitreous substance.

The method of cooling the molten product is preferably a method of dropping the molten product into the site between rollers rotating at a high speed of a twin roller and cooling it, a method of dropping the molten product on a rotating single roller to cool it, or a method of pressing the molten product on a cooled carbon plate or metal plate to cool it. Among them, the cooling method using a twin roller is particularly preferred, since the cooling rate is high and treatment of a large amount is possible. The twin roller is preferably one made of a metal, a carbon or a ceramic.

It is also possible to employ a method of directly pouring the molten product in water, as the cooling method. However, by this method, it is difficult to control the conditions, an amorphous substance is hardly obtainable, the solid tends to be blocky, and much time and energy are required for the pulverization. As the cooling method, there may be a method of directly pouring the molten product in liquid nitrogen, whereby the cooling rate is higher than that in the case of water, however, this method has the same problems as the method of using water and costs a lot.

Cooling of the molten product is carried out preferably in the air, in an inert gas or in a reducing gas, in view of easy production equipment. By this cooling method, an amorphous substance can be obtained more easily.

The rate of cooling the molten product is preferably at least -1×10³ °C/sec, particularly preferably at least -1×10⁴ °C/sec. In this specification, the temperature change per unit time in the case of cooling (i.e. the cooling rate) is represented by a negative value, and the temperature change per unit time in the case of heating (i.e. the heating rate) is represented by a positive value. When the cooling rate is at least the above value, an amorphous substance is easily obtained. The upper limit of the cooling rate is preferably at a level of -1×10¹⁰ °C/sec in view of the production equipment and the mass productivity, and is particularly preferably -1×10⁸ °C/sec in view of practicability.

### [Step (II)]

The step (II) is a step of pulverizing the blended product obtained in the step (I) while mixing it to obtain a pulverized product. By the pulverization, a pulverized product of the blended product, having particles of the compound with smaller particle sizes mixed uniformly and densely. Further, instead of using a blended product containing a carbon source, the carbon source may be mixed in the blended product containing no carbon source in this step. In a case where the carbon source is mixed in this step, e.g. the type and the amount of the carbon source may be the same as in the case of producing the blended product containing the carbon source. The pulverization of the blended product is carried out preferably by dry or wet pulverization by using a ball mill, a jet mill, a planetary mill or the like. In a case where a blended product containing a carbon source is used or in a case where a carbon source is mixed in this step, wet pulverization is preferred, with a view to dispersing the carbon source uniformly on the surface of the pulverized product. Particularly when the carbon source is an organic compound, preferred is wet pulverization using a dispersion medium in which the organic compound is soluble.

As the dispersion medium at the time of the wet pulverization, water or an organic solvent such as ethanol, isopropyl alcohol, acetone, hexane or toluene may be used. A liquid mixture of water and an organic solvent may also be used. The mean particle size of the pulverized product when the step (II) is completed is preferably from 1 nm to 100 µm, more preferably from 10 nm to 10 µm, particularly preferably from 10 nm to 1 µm by the mean particle size as calculated as volume, so as to accelerate the reaction of the first compound and the second compound. When the mean particle size is within the above range, the reaction of the first compound and the second compound can be accelerated. When the particle size of the pulverized product is small, the heating temperature can be reduced and the heating time can be shortened in the step (III), such being favorable. In a case where the step (II) is carried out by wet pulverization, it is preferred that the dispersion medium is removed by e.g. sedimentation, filtration, reduced-pressure drying or heat drying, followed by the step (III).

### [Step (III)]

The step (III) is a step of reacting the first compound and the second compound to obtain the phosphate compound (3), preferably its crystalline particles, further preferably its olivine-type crystal particles. The step (III) preferably has a step of thermal decomposition of the second compound or a crystal nucleus formation step and a grain growth step when the first compound is an amorphous substance. Further, in a case where a pulverized product containing a carbon source is used, it is preferably a step of binding the carbon source or its thermally decomposed product to the surface of the particles of the phosphate compound (3) to be formed. In a case where the step (II) is carried out by wet pulverization, the dispersion medium may be removed by heating in the step (III).

The step (III) is carried out in an inert gas or in a reducing gas.

The pressure may be any of ordinary pressure, elevated pressure (at least 1.1×10⁵ Pa) or reduced pressure (at most 0.9×10⁵ Pa). Further, in a case where it is carried out by putting a container in which a reducing agent (for example, graphite) and the pulverized product are put, in a heating furnace, reduction of M ions (for example, a change from M³⁺ to M²⁺) in the pulverized product can be accelerated.

It is preferred that some or all of M is reduced in the step (III), and the valency N³ of M in the phosphate compound (3) becomes equal to or lower than the valency N¹ of M in the first compound. That is, the valency N³ of M in the phosphate compound (3) as an average value is smaller than the valency N¹ of M in the first compound as its material (N³<N¹). It is preferred that substantially all of M in the first compound is reduced in the step (III) (N³≦N¹-1). Further, the valency N³ of M in the phosphate compound (3) is preferably N¹-1.

The heating temperature is preferably from 400 to 900°C, particularly preferably from 500 to 800°C. In a case where a compound containing an amorphous portion, particularly a compound having from 80 to 100 mass% of an amorphous portion is used as the first compound, the heating step can be carried out at a temperature lower than the heating temperature of a conventional solid phase reaction. If the heating temperature is at least the lower limit of the above range, the reaction will easily occur. When it is at most the upper limit of the above range, the pulverized product will not fuse.

The heating step may be carried out by maintaining a certain temperature or may be carried out by setting multiple steps of temperature. Since the particle size to be formed tends to be large as the heating temperature is high, the heating temperature is preferably set according to the desired particle size.

Further, the heating time (retention time at the heating temperature) is preferably from 1 to 72 hours considering the desired particle size.

After completion of the heating in the step (III), the pulverized product is usually cooled to room temperature (from 20 to 25°C). The cooling rate in this cooling is preferably from -30°C/hour to -300°C/hour. When the cooling rate is within such a range, distortion by heating can be removed, and in a case where the formed product is crystalline particles, the desired product can be obtained while maintaining the crystal structure. Further, there is also such a merit that cooling is possible without a cooling means. The cooling may be conducted by leaving the pulverized product to stand to room temperature (from 20 to 25°C). Cooling is preferably carried out in an inert gas or in a reducing gas.

The organic compound and the carbon powder attached to the surface of the pulverized product of the blended product in the step (II) are bound to the particle surface of the phosphate compound (3) formed in the step (III) and function as a conductive material. The organic compound is thermally decomposed in the step (III), and further, at least part thereof is converted to a carbide and functions as a conductive material. The thermal decomposition of the organic compound is carried out preferably at a temperature of at most 400°C, and the carbonization is preferably carried out at a temperature of at most 600°C. When the thermal decomposition is carried out at a temperature of at most 600°C, the volume change due to the thermal decomposition reaction in addition to the carbonization of the carbon powder can be made small, whereby the carbide and the carbon powder can be bound to the particle surface of the phosphate compound (3) uniformly and strongly.

### [Phosphate compound (3)]

The phosphate compound (3) obtainable by the production process of the present invention is a phosphate compound useful particularly as a cathode material for a secondary battery. The solid comprising the phosphate compound (3) preferably has an olivine-type crystal structure, and is particularly preferably olivine-type crystal particles. The particles include both primary particles and secondary particles. Further, when a carbon source is contained in the blended product, simultaneously with formation of the crystalline particles of the phosphate compound (3), a powder material wherein a conductive material based on the organic compound or the carbon powder is uniformly and strongly bound to the surface, is produced. Such a powder material is suitable as a cathode material for a secondary battery. In a case where secondary particles are present in the obtained particles of the phosphate compound (3) or powder material containing them, they may be crushed or pulverized to such an extent that the primary particles are not broken.

According to the production process of the present invention, the composition of the phosphate compound (3) is easily controlled, and uniform particles are easily obtained, whereby the phosphate compound (3) can be produced easily at a low cost. Particularly, the composition of the olivine-type crystal particles of the phosphate compound (3) is easily controlled, and uniform particles are easily obtained. Further, olivine-type crystalline particles excellent in uniformity of the chemical composition and the particle size and having a high crystallinity, can be obtained. By such olivine-type crystal particles of the phosphate compound (3), it is possible to improve the properties and the reliability based on the uniformity of the chemical composition and the particle size. Further, since the obtainable olivine-type crystal particles have a high crystallinity, it is possible to suppress a functional decline during repeated use, when applied to a cathode material for a secondary battery. Accordingly, it is possible to provide a cathode material for a secondary battery excellent in the properties and the reliability at a low cost.

Further, when a carbon source is used, a conductive material can be bound to the surface of the particles of the phosphate compound (3) uniformly and strongly. Accordingly, it is possible to improve the conductivity and the reliability of a cathode material comprising the powder of the phosphate compound (3). That is, a cathode material for a secondary battery excellent in the properties and the reliability including conductivity can be obtained with good reproducibility. Thus, it is possible to provide a cathode material for a secondary battery capable of improving the capacity of e.g. a lithium-ion secondary battery as well as maintaining its battery properties and reliability for a long period of time.

The phosphate compound (3) obtainable by the production process of the present invention is preferably a phosphate compound having a composition represented by the following formula (4):

AₐM_{b}PO_{(0.5a+b+2.5)} (4)

wherein A and M are the same atoms as the above, and a and b are the same numbers as the above.

Particularly preferred is one having a composition using Li as A and using at least one member selected from Fe and Mn as M.

The composition of the phosphate compound (3) is more preferably a phosphate compound having a composition represented by LiMPO₄, further preferably a phosphate compound having a composition represented by LiFe_{d}Mn_{1-d}PO₄(0≦d≦1), particularly preferably a phosphate compound having a composition represented by LiFePO₄. Such a phosphate compound is preferably olivine-type crystal particles, and a powder comprising such olivine-type crystal particles is suitable as a cathode material for a secondary battery.

The mean particle size of the particles of the phosphate compound (3) of the present invention is preferably from 10 nm to 10 µm, particularly preferably from 10 nm to 2 µm as the mean particle size as calculated as volume. When the mean particle size is within such a range, the conductivity of the powder of the particles of the phosphate compound (3) will be higher. The mean particle size is obtained, for example, by observation by an electron microscope or measurement by a laser diffraction type particle size analyzer. The specific surface area of the powder comprising the phosphate compound (3) is preferably from 0.2 to 200 m²/g, particularly preferably from 1 to 200 m²/g. When the specific surface area is within such a range, the conductivity of the powder comprising the phosphate compound (3) will be high. The specific surface area is measured, for example, by a specific surface area measuring device by a nitrogen adsorption method.

A particularly preferred embodiment of the production process of the present invention is described below, however, the present invention is not limited thereto. The first compound is preferably a compound which is easily converted to the amorphous state. The first compound which is easily converted to the amorphous state may, for example, be MₓP_{y}O_{z} using at least one member selected from Fe and Mn as M, i.e. (FeₑMn₁₋ₑ)ₓP_{y}O_{z} (0≦e≦1). The second compound is preferably a carbonate or a hydrogen carbonate of Li. The obtainable phosphate compound (3) is preferably a crystalline substance.

As a first specific example of the particularly preferred embodiment, a process of using Fe_{f}Mn_{2-f}P₂O₇ (0≦f≦2) as the first compound and using at least one member selected from Li₂CO₃ and LiHCO₃ as the second compound to produce particles containing LiFe_{d}Mn_{1-d}PO₄ (0≦d≦1) having an olivine-type crystal structure may be mentioned.

As a second specific example, a process of using Fe_{g}Mn_{1-g}PO₄ (0≦g≦1) as the first compound and using at least one member selected from Li₂CO₃ and LiHCO₃ as the second compound to produce particles containing LiFe_{d}Mn_{1-d}PO₄ (0≦d≦1) having an olivine-type crystal structure may be mentioned.

### [Methods for producing cathode for secondary battery and secondary battery]

By using the phosphate compound (3) obtained by the production process of the present invention as a cathode material for a secondary battery, a cathode for a secondary battery, and a secondary battery, can be produced. The secondary battery may, for example, be a lithium metal secondary battery, a lithium-ion secondary battery or a lithium polymer secondary battery, and is preferably a lithium-ion secondary battery. The shape of the battery is not limited, and various shapes and sizes may properly be employed, such as a cylindrical form, a square form or a coin-form.

The cathode for a secondary battery of the present invention can be produced in accordance with a known process for producing an electrode except that the phosphate compound (3) obtainable by the production process of the present invention is used. For example, the powder of the phosphate compound (3) is mixed as the case requires with a known binder (such as polytetrafluoroethylene, polyvinylidene fluoride, polyvinyl chloride, an ethylene propylene diene polymer, a styrene/butadiene rubber, an acrylonitrile/butadiene rubber, a fluororubber, polyvinyl acetate, polymethyl methacrylate, polyethylene or nitrocellulose) and further with a known conductive material (such as acetylene black, carbon, graphite, natural graphite, artificial graphite or needle coke) as the case requires, and the obtained powder mixture is compressed on a support made of stainless steel or the like, or may be put in a metal container. Otherwise, for example, a method of applying a slurry obtained by mixing the powder mixture with an organic solvent (such as N-methylpyrrolidone, toluene, cyclohexane, dimethylformamide, dimethylacetamide, methyl ethyl ketone, methyl acetate, methyl acrylate, diethyltriamine, N-N-dimethylaminopropylamine, ethylene oxide or tetrahydrofuran) to a metal substrate of e.g. aluminum, nickel, stainless steel or copper, may also be employed.

As the structure of the secondary battery, the structure in a known secondary battery can be employed except that the cathode for a secondary battery obtainable by the production process of the present invention is used as an electrode. The same applies to a separator, a cell casing, etc. As the anode, it is possible to use a known active material for an anode as an active material, and it is preferred to use at least one member selected from the group consisting of an alkali metal material and an alkaline earth metal material. The electrolyte solution is preferably a non-aqueous electrolyte solution. That is, the secondary battery obtainable by the production process of the present invention is preferably a non-aqueous electrolytic lithium-ion secondary battery.

### EXAMPLES

Now, the present invention will be described in further detail with reference to Examples. However, it should be understood that the present invention is by no means restricted to the specific Examples.

### (Examples 1 to 10)

Triiron tetraoxide (Fe₃O₄), manganese dioxide (MnO₂), tricobalt tetraoxide (Co₃O₄), nickel oxide (NiO) and ammonium dihydrogen phosphate (NH₄H₂PO₄) were weighed to achieve a composition of a first compound as identified in Table 1 to obtain a material mixture, and the material mixture was dry-pulverized. A crucible made of a platinum alloy containing 20 mass% of rhodium was charged with the obtained pulverized product. Then, the crucible was put in an electric furnace provided with a heating element made of molybdenum silicide (manufactured by Motoyama, device name: NH3045F). The electric furnace was heated at 1,300°C for 0.5 hour while flowing N₂ gas at a flow rate of 2 L/min to heat the pulverized product. After the pulverized product was visually confirmed to be transparent, a molten product was obtained.

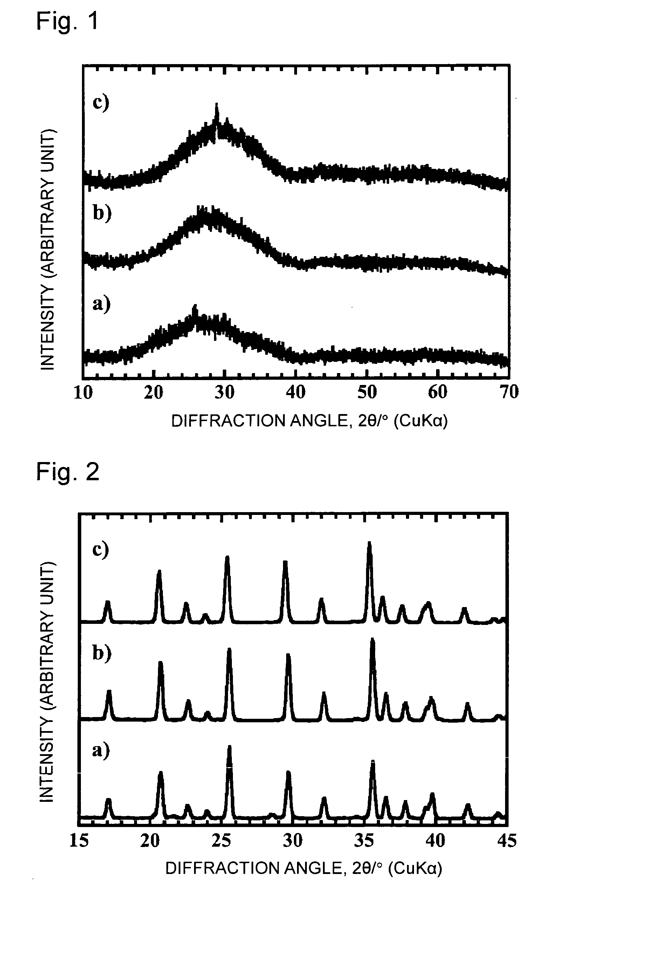

Then, the molten product in the crucible was dropped, and the dropped molten product was permitted to pass through a twin roller made of stainless steel having a diameter of about 15 cm and rotating at 400 rpm to cool the droplet at a cooling rate of -1×10⁵ °C/sec to room temperature (from 20 to 25°C), thereby to obtain a black or brownish-red solid in the form of flakes. The obtained solid was a vitreous substance. From the X-ray diffraction pattern, the solid in the form of flakes obtained in each Example was found to be mainly composed of an amorphous portion. The proportion of the amorphous portion was at least 90 mass% in each Example. In such a manner, the first compound was produced. X-ray diffraction patterns of the solids in the form of flakes obtained in Examples 1, 3 and 5 are shown in Fig. 1. In Fig. 1, a) is an X-ray diffraction pattern of the solid in the form of flakes obtained in Example 1, and b) and c) are X-ray diffraction patterns of the solids in the form of flakes obtained in Examples 3 and 5, respectively.

The solid in the form of flakes obtained in each Example was preliminarily dry-pulverized, the obtained pulverized product and lithium carbonate (second compound) were blended in a molar ratio based on oxides of 1:1, and the blended product was wet-pulverized using ethanol as a medium. Each pulverized product was heated in a 3 vol% H₂-Ar gas at 700°C for 8 hours to obtain phosphate compound particles having a composition represented by LiMPO₄. Further, in each Example, by heating each pulverized product in a 3 vol% H₂-Ar gas at 600°C for 8 hours and at 800°C for 8 hours, phosphate compound particles having a composition represented by LiMPO₄ were obtained by heating at each temperature, in the same manner as in the case of the above heating at 700°C for 8 hours. Mineral phase of the obtained particles was identified by an X-ray diffractometer, whereupon a diffraction pattern similar to an existing diffraction pattern of LiMPO₄ was obtained.

**[Table 1]**

| | First compound | Second compound |
|---|---|---|
| Example 1 | Fe₂P₂O₇ | Li₂CO₃ |
| Example 2 | Fe_{1.5}Mn_{0.5}P₂O₇ | Li₂CO₃ |
| Example 3 | FeMnP₂O₇ | Li₂CO₃ |
| Example 4 | Fe_{0.5}Mn_{1.5}P₂O₇ | Li₂CO₃ |
| Example 5 | Mn₂P₂O₇ | Li₂CO₃ |
| Example 6 | Co₂P₂O₇ | Li₂CO₃ |
| Example 7 | FeCoP₂O₇ | Li₂CO₃ |
| Example 8 | FeNiP₂O₇ | Li₂CO₃ |
| Example 9 | Fe_{0.67}Mn_{0.67}Co_{0.66}P₂O₇ | Li₂CO₃ |
| Example 10 | Fe_{0.5}Mn_{0 5}Co_{0.5}Ni_{0.5}P₂O₇ | Li₂CO₃ |

With respect to the particles obtained in Examples 1 to 5, a diffraction pattern similar to an existing diffraction pattern of LiFePO₄ (PDF number: 01-083-2092) and/or LiMnPO₄ (PDF number: 01-077-0178) was obtained. X-ray diffraction patterns of the phosphate compound particles having a composition represented by LiMPO₄ obtained by heating at 700°C for 8 hours in Examples 1, 3 and 5 are shown by a), b) and c) in Fig. 2, respectively. Further, in Example 6, a diffraction pattern similar to an existing diffraction pattern of LiCoPO₄ (PDF number: 01-089-6192) was obtained, and in Examples 7 to 10, a diffraction pattern considered to be a solid solution or eutectic of phosphate compound particles having a composition represented by LiMPO₄ was obtained.

The above X-ray diffraction patterns indicate that the respective particles are olivine-type crystal particles.

The particle size distribution of each of the phosphate compounds obtained in Examples 1 and 5 was measured by using a laser diffraction/scattering particle size distribution measuring device (manufactured by Horiba, Ltd., device name: LA-920). The mean particle size as calculated as volume was 0.76 µm (Example 1) and 0.83 µm (Example 5). Further, the specific surface area was measured by a specific surface area measuring device (manufactured by Shimadzu Corporation, device name: ASAP2020), whereupon it was 25 m²/g (Example 1) and 29 m²/g (Example 5).

### (Examples 11 and 12)

The solid in the form of flakes obtained in each of Examples 1 and 3 was preliminarily dry-pulverized, the pulverized product and lithium carbonate (second compound) were blended in a molar ratio based on oxides of 1:1 to obtain a blended product, and to the blended product, carbon black was added so that the mass ratio of the blended product to carbon black became 90:10. The mixture was wet-pulverized in the same manner as in Example 1. Each pulverized product was heated in N₂ gas at 800°C for 8 hours, to obtain phosphate compound particles having a composition represented by LiMPO₄ containing carbon.

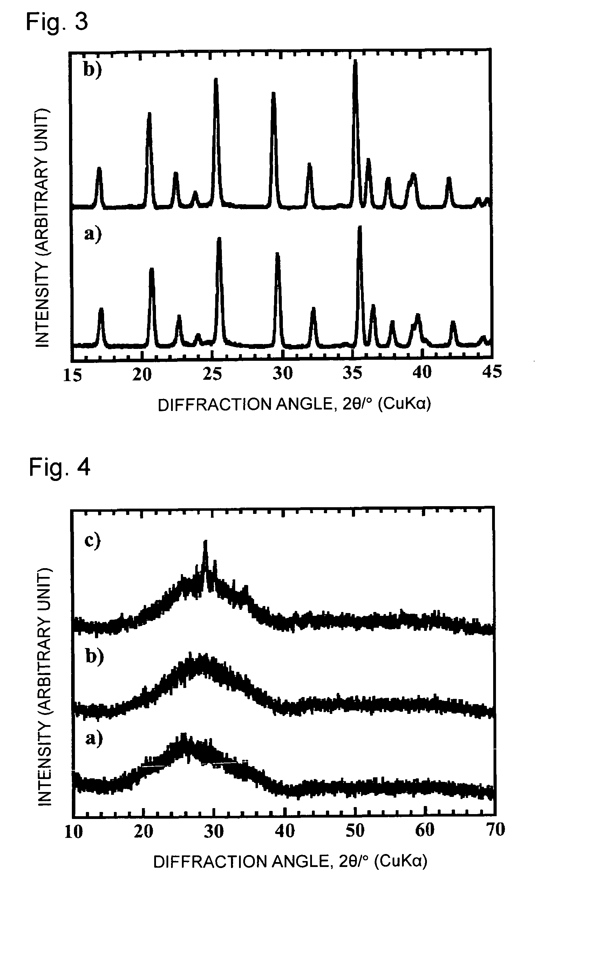

Mineral phase of each of the obtained particles was identified by an X-ray diffractometer. As a result, in Example 11, a diffraction pattern similar to an existing diffraction pattern of LiFePO₄ was obtained. In Example 12, a diffraction pattern similar to existing diffraction patterns of LiFePO₄ and LiMnPO₄ was obtained, and the phosphate compound particles were considered to be a solid solution of them. Diffraction patterns in Examples 11 and 12 are shown by a) and b) in Fig. 3. Further, the carbon content of the phosphate compound particles having a composition represented by LiMPO₄ obtained in each of Examples 11 and 12 was measured by a carbon analyzer, and it was 8.5% (Example 11) and 8.3% (Example 12) based on the mass of C.

### (Examples 13 to 18)

Triiron tetraoxide (Fe₃O₄), manganese dioxide (MnO₂), tricobalt tetraoxide (Co₃O₄), nickel oxide (NiO) and ammonium dihydrogen phosphate (NH₄H₂PO₄) were weighed to achieve a composition of a first compound as identified in Table 2 and mixed, and the mixture was dry-pulverized in the same manner as in Example 1, followed by heating at 1,300°C for 0.5 hour. Then, in the same manner as in Example 1, the molten product was cooled to room temperature (from 20 to 25°C) to product a solid in the form of flakes. From X-ray diffraction patterns, the solid in the form of flakes obtained in each Example was found to be mainly composed of an amorphous portion. The proportion of the amorphous portion was at least 90 mass% in each Example. X-ray diffraction patterns of the solids in the form of flakes obtained in Examples 13, 15 and 17 are shown by a), b) and c) in Fig. 4.

**[Table 2]**

| | First compound | Second compound |
|---|---|---|
| Example 13 | FePO₄ | Li₂CO₃ |
| Example 14 | Fe_{0.75}Mn_{0.25}PO₄ | Li₂CO₃ |
| Example 15 | Fe_{0.5}Mn_{0.5}PO₄ | Li₂CO₃ |
| Example 16 | Fe_{0.25}Mn_{0.75}PO₄ | Li₂CO₃ |
| Example 17 | MnPO₄ | Li₂CO₃ |
| Example 18 | Fe_{0.25}Mn_{0.25}Co_{0.25}Ni_{0.25}PO₄ | Li₂CO₃ |

Each of the solids in the form of flakes obtained in Examples was preliminarily dry-pulverized, the pulverized product and lithium carbonate (second compound) were blended in a molar ratio based on oxides of 2:1 to obtain a blended product, and to the blended product, carbon black and glucose (aqueous solution) were added so that the mass ratio of the blended product:carbon black:glucose became 90:5:5. The mixture was pulverized in the same manner as in Example 1. Each pulverized product was heated in a 3 vol% H₂-Ar gas at 700°C for 8 hours to obtain phosphate compound particles having a composition represented by LiMPO₄ containing carbon. Further, also by heating each pulverized product in a 3 vol% H₂-Ar gas at 600°C for 8 hours or by heating at 800°C for 8 hours, the same phosphate compound particles were obtained.

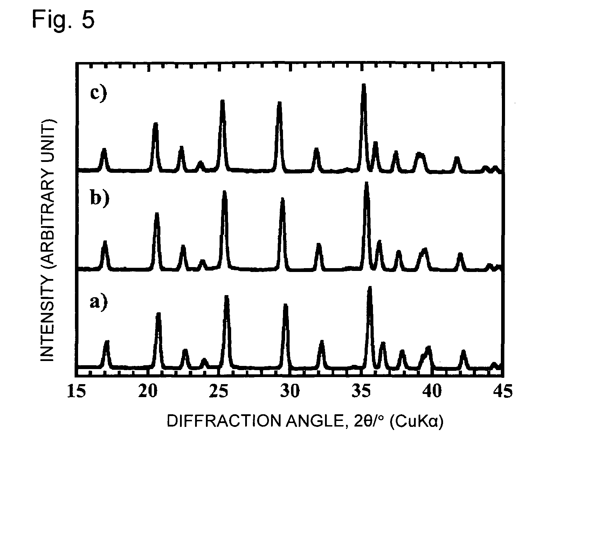

Mineral phase of each of the obtained particles was identified by an X-ray diffractometer, whereupon in each of Examples 13 to 17, a diffraction pattern similar to an existing diffraction pattern of LiFePO₄ and/or LiMnPO₄ was obtained. X-ray diffraction patterns of LiMPO₄ particles obtained by heating at 700°C for 8 hours in Examples 13, 15 and 17 are shown by a), b) and c) in Fig. 5, respectively. Further, in Example 18, a diffraction pattern considered to be an eutectic of phosphate compound particles having a composition represented by LiMPO₄ was obtained. Further, the carbon content of the phosphate compound particles having a composition represented by LiMPO₄ obtained in each of Examples 13, 15 and 17 was measured by a carbon analyzer, and it was 6.2% (Example 13), 6.4% (Example 15) and 6.5% (Example 17) based on the mass of C.

### (Examples 19 and 20)

### <Production of cathode for Li-ion secondary battery and cell for evaluation>

The phosphate compound particles having a composition represented by LiMPO₄ or the phosphate compound particles having a composition represented by LiMPO₄ containing carbon obtained by heating at 800°C for 8 hours in each of Examples 1 and 11 as an active material, a polyvinylidene fluoride resin as a binder and acetylene black as a conductive material were weighed so that the ratio would be 85:5:10 by mass, and they were well mixed in N-methylpyrrolidone as a solvent to prepare a slurry. Then, this slurry was applied on an aluminum foil having a thickness of 30 µm with a bar coater, and dried in the air at 120°C to remove the solvent. The coating layer was consolidated by a roll press, and the aluminum foil was cut into strips having a width of 10 mm and a length of 40 mm.

The coating layer was peeled except for an edge portion of 10×10 mm of the strip-shaped aluminum foil to obtain an electrode. The thickness of the coating layer of the obtained electrode after roll press was 20 µm. The obtained electrode was dried in vacuum at 150°C, and then it was brought into a glove box filled with a purified argon gas and was permitted to face to a counter electrode wherein lithium foil was compressed to a nickel mesh via a separator made of a porous polyethylene film, and further the both sides were wedged between polyethylene plates to be fixed.

The facing electrodes were put in a polyethylene beaker, and a non-aqueous electrolyte solution obtained by dissolving lithium hexafluorophosphate in a mixed solvent of ethylene carbonate and ethyl methyl carbonate (in a volume ratio of 1:1) in a concentration of 1 mol/L was poured thereto to let the facing electrodes be sufficiently impregnated. The electrodes after impregnation with the electrolyte solution were removed from the beaker and put in a bag made of aluminum laminate film, and the lead portion was taken out from the bag, followed by sealing to obtain a half-cell. Characteristics of this half-cell were measured as follows.

### <Evaluation of charge-discharge characteristics of cathode for Li-ion secondary battery>

The obtained half-cell was put in a constant-temperature oven of 25°C and was connected to a constant current charge-discharge tester (manufactured by Hokuto Denko Corporation, device name: HJ201 B) to carry out a charge-discharge test. As to current density, the current value per mass of the electrode active material (mass except for the conductive material and the binder) was set to be 85 mA/g, and charge and discharge were carried out. The charge cut-off voltage was set to be 4.2 V against the Li counter electrode as a reference, and discharge was started immediately after the voltage reached the cut-off voltage. The discharge cut-off voltage was set to be 2.0 V against the Li counter electrode as a reference. This charge-discharge cycle was repeated for 10 times. The discharged capacities in the 5th cycle of the half-cells using the active materials in Examples 19 and 20 were 154 mAh/g (Example 19) and 152 mAh/g (Example 20), respectively.

### INDUSTRIAL APPLICABILITY

The phosphate compound obtainable by the present invention is useful as a cathode material to be used for production of a cathode of a secondary battery such as a lithium-ion secondary battery.

The entire disclosure of Japanese Patent Application No. 2010-051564 filed on March 9, 2010 including specification, claims, drawings and summary is incorporated herein by reference in its entirety.

## Claims

1. A process for producing a phosphate compound, comprising:
a step of blending a first compound having a composition represented by the following formula (1) and a second compound containing at least one atom A selected from Li, Na and K in an atomic ratio represented by the following formula (2) to obtain a blended product;
a step of pulverizing the blended product while mixing it to obtain a pulverized product; and
a step of heating the pulverized product in an inert gas or in a reducing gas to obtain a phosphate compound having a composition represented by the following formula (3):
MₓP_{y}O_{z} (1)
wherein M is at least one atom selected from Fe, Mn, Co and Ni, the valency N¹ of M satisfies +2≦N¹≦+4, x and y are numbers which satisfy 0.8≦x/y≦1.2, and z is a number which depends on the values of x and y, and the valency N¹ of M;
A:M:P=a:b:1 (2)
wherein A and M are the same atoms as the above, a satisfies 0<a<2, and b satisfies 0.8<b<1.2; and
AₐM_{b}PO_{c} (3)
wherein A and M are the same atoms as the above, the valency of M is equal to or lower than the above N¹, a and b are the same numbers as the above, and c is a number which depends on the values of a and b, and the valency of M.

2. The process for producing a phosphate compound according to Claim 1, wherein the first compound is a compound obtained by blending at least one member selected from an oxide of M, an oxyhydroxide of M and a metal of M, and at least one member selected from phosphorus oxide, ammonium phosphate, ammonium hydrogen phosphate, phosphoric acid, polyphosphoric acid, phosphorous acid and hypophosphorous acid, in a composition of M and P as represented by the formula (1) to obtain a material mixture, pulverizing the material mixture, followed by heating to obtain a molten product, and cooling the molten product.

3. The process for producing a phosphate compound according to Claim 1, which comprises a step of blending at least one member selected from an oxide of M, an oxyhydroxide of M and a metal of M, and at least one member selected from phosphorus oxide, ammonium phosphate, ammonium hydrogen phosphate, phosphoric acid, polyphosphoric acid, phosphorous acid and hypophosphorous acid, in a composition of M and P as represented by the formula (1) to obtain a material mixture, pulverizing the material mixture, followed by heating to obtain a molten product, and cooling the molten product to obtain the first compound having a composition represented by the formula (1).

4. The process for producing a phosphate compound according to Claim 2 or 3, wherein the rate of cooling the molten product is from -10³ °C/sec to -10¹⁰ °C/sec.

5. The process for producing a phosphate compound according to any one of Claims 1 to 4, wherein the first compound is a solid compound containing an amorphous portion.

6. The process for producing a phosphate compound according to any one of Claims 1 to 5, wherein the second compound is a compound which is converted to A₂O by heating.

7. The process for producing a phosphate compound according to any one of Claims 1 to 6, wherein the second compound is at least one member selected from A₂CO₃, AHCO₃ and AOH (provided that these compounds may form a hydrated salt).

8. The process for producing a phosphate compound according to any one of Claims 1 to 7, wherein the step of heating the pulverized product to obtain the phosphate compound having a composition represented by the formula (3) is carried out in an inert gas or in a reducing gas at from 400 to 900°C.

9. The process for producing a phosphate compound according to any one of Claims 1 to 8, wherein in the step to obtain the pulverized product, at least one carbon source selected from an organic compound and a carbon powder is incorporated in the blended product, and the amount of the carbon source is from 0.1 to 20 mass% by the proportion of the amount (mass) of the carbon source as calculated as carbon based on the total mass of the blended product and the amount (mass) of the carbon source as calculated as carbon.

10. The process for producing a phosphate compound according to any one of Claims 1 to 9, wherein the phosphate compound having a composition represented by the formula (3) is crystal particles having a composition represented by the following formula (4):
AₐM_{b}PO_{(0.5a+b+2.5)} (4)
wherein A and M are the same atoms as the above, and a and b are the same numbers as the above.

11. The process for producing a phosphate compound according to any one of Claims 1 to 10, wherein the phosphate compound having a composition represented by the formula (3) is particles containing LiMPO₄ having an olivine-type crystal structure.

12. The process for producing a phosphate compound according to any one of Claims 1 to 11, wherein the phosphate compound having a composition represented by the formula (3) is particles containing LiFe_{d}Mn_{1-d}PO₄ (wherein d satisfies 0≦d≦1) having an olivine-type crystal structure.

13. A process for producing a phosphate compound, comprising:
a step of blending a first compound having a composition represented by the following formula (1) and a second compound containing at least one atom A selected from Li, Na and K to obtain a blended product;
a step of pulverizing the blended product while mixing it to obtain a pulverized product; and
a step of heating the pulverized product in an inert gas or in a reducing gas to obtain a phosphate compound having a composition represented by the following formula (4):
MₓP_{y}O_{z} (1)
wherein M is at least one atom selected from Fe, Mn, Co and Ni, the valency N¹ of M satisfies +2≦N¹≦+4, x and y are numbers which satisfy 0.8≦x/y≦1.2, and z is a number which depends on the values of x and y, and the valency N¹ of M;
AₐM_{b}PO_{(0.5a+b+2.5)} (4)
wherein A and M are the same atoms as the above, the valency of M is equal to or lower than the above N¹, a satisfies 0<a<2, and b satisfies 0.8<b<1.2.

14. A method for producing a cathode for a secondary battery, which comprises obtaining a phosphate compound by the production process as defined in any one of Claims 1 to 13, and using the phosphate compound as a cathode material for a secondary battery to produce a cathode for a secondary battery.

15. A method for producing a secondary battery, which comprises obtaining a cathode for a secondary battery by the production method as defined in Claim 14, and using the cathode for a secondary battery to produce a secondary battery.
